# EUROPEAN PATENT SPECIFICATION

(11) **EP 2 530 925 B1**
(45) Date of publication and mention of the grant of the patent: **26.12.2018**
(21) Application number: 12167311.5
(22) Date of filing: 09.05.2012
(51) Int. Cl.: H04N 1/00, G06F 3/12

(54) **Image forming apparatus, image forming system and computer readable recording medium storing control program for the image forming apparatus**
Bilderzeugungsvorrichtung, Bilderzeugungssystem und Steuerprogramm speicherndes computerlesbares Aufzeichnungsmedium
Appareil et système de formation d'images et support d'enregistrement lisible avec programme de commande

(30) Priority: 31.05.2011 JP 2011121387
(43) Date of publication of application: 05.12.2012
(73) Proprietor: Konica Minolta Business Technologies, Inc., Tokyo 1000005 (JP)
(72) Inventor: Furukawa, Hiroshi, Tokyo 1000005 (JP)
(74) Representative: Raynor, Simon Mark

(56) References cited:
- JP-A- 2010 280 060
- US-A1- 2009 103 128

## Description

### BACKGROUND OF THE INVENTION

### FIELD OF THE INVENTION

The present invention relates to an image forming apparatus that permits any replacement units to be mounted on/demounted from the apparatus and/or permits any external devices to be connected to/disconnected from the apparatus, an image forming system that includes the image forming apparatus, and a computer readable recording medium storing control program for controlling the image forming apparatus.

### DESCRIPTION OF THE RELATED ART

In the image forming apparatus for forming an image and transferring the formed image onto a paper, it is proposed that the image forming apparatus should be designed to permit the operator to mount or demount any units included in the apparatus configuration on or from the apparatus in such a manner that the downtime period can be reduced. It is known that some units can be replaced on the basis of their lifetime, some units can be replaced by other units that provide the different functions, and some new units can be mounted to provide the new functions.

There is an image forming apparatus that is connected to a post-processing apparatus to perform post-processing such as stapling, punching and binding of the papers with image transferred on. In this image forming apparatus, a post-processing apparatus can be connected to or disconnected from the apparatus so that another post-processing apparatus can be connected or a post-processing apparatus can be connected only when it is required.

In the implementation of the post processing, improvements are made for purpose of improvement of the workability.

For example, in the patent literature 1, there is a proposed image forming apparatus that is designed to permit the user to store the user's usage examples on the store, from which the user can extract and select the frequently utilized functions. Those frequently utilized functions include the functions (such as the stapling function, binding function and the like) provided by the post-processing apparatus.

In the patent literature 2, there is a proposed image forming apparatus that is designed to permit the user to accept the instruction to detach any particular post-processing via the user interface. If the instruction of the detachment of the post-processing is accepted in this case, it is possible to control a printing job so that the particular post-processing function as instructed can not be executed.

In the patent literature 3, there is a proposed image forming apparatus that ,with the job files stored on the hard disk drive(be described as HDD as below) being combined, the post-processing conditions in each job file will become invalid if the total post-processing setting mode is selected.

By the way, in any one of the conventional image forming apparatuses, it is recognized that any unit is mounted and/or any post-processing apparatus is connected as described above, and the process can be performed based on that recognition using such unit or post-processing apparatus. When a job is to be created and stored for the conventional image forming apparatus, the state in which the particular unit is mounted or not or the particular post-processing apparatus is connected or not is referenced by the control section, and the job that uses the unit as mounted or the post-processing apparatus as connected can be created and stored by the control section. However, it is controlled so that the job that uses the unit as it now is not mounted or the post-processing apparatus as it now is not connected cannot be created and stored. This is because the job cannot be created as the reserved job and cannot be executed immediately because there is the possibility that the user does not have the optional unit or post-processing apparatus that can be replaced or the optional unit or post-processing apparatus cannot be connected if the power is turned off.

Note, however, that even though the staples or papers are not available or failure occurs in the post-processing apparatus, the job cannot be executed (printed) but the job can be saved or the job can be created as the reserved job if the post-processing apparatus is connected. This is because the job will be able to be executed if the papers or stables are supplied or the machine is repaired.

### CITATION LIST

### PATENT LITERATURE

Patent Literature 1: Japanese Patent Application Laid-Open No. 2010-217985
Patent Literature 2: Japanese Patent Application Laid-Open No. 2009-78513
Patent Literature 3: Japanese Patent Application Laid-Open No. 2007-62269

US2009/0103128 discloses job processing system and method thereof and storage medium, and program. It is confirmed whether or not a job that instructs the execution of multiple processes using the XML language includes a process that cannot be executed by a job processing unit, and in the case where it has been confirmed that the job includes a process that cannot be executed by the job processing unit, the job processing unit is caused to execute a process that the job processing unit is capable of executing from among the multiple processes. Processes that cannot be executed by the job processing unit are ignored, cancelled, or processed according to a pre-set specification.

### SUMMARY OF THE INVENTION

According to the present invention there is provided an image forming apparatus according to claim 1,

In the image forming apparatus that allows the units to be mounted on or demounted from the apparatus or post-processing apparatuses to be connected to or disconnected from the apparatus as described above, even though a particular unit may not yet be mounted or a particular post-processing apparatus may not yet be connected, at present, the user will be able to mount or connect that particular unit or post-processing apparatus if the particular unit or post-processing apparatus is retained and managed by the user or is mounted on or connected to another image forming apparatus that is used by the user.

In this case, if a job is to be created and then saved, after the unit or /post-processing apparatus is connected and the image forming apparatus is then restarted, this might involve problem that the working time would become longer and the work would be constrained by such longer work time.

For the image forming apparatus having the HDD installed thereon, furthermore, a job may be stored on the HDD temporarily without being executed immediately after the job is created, and the job can be executed later on. For the conventional image forming apparatus, however, if it is desired that any option or any function included in the post-processing apparatus is used at the time when a job is created, it is necessary that such option or function will be installed and then the job will be created even though the job is to be stored on HDD temporarily.

There is a desire that demands that a job is to be created and is then to be stored without having any particular unit installed or having any post-processing apparatus connected. Even though a job cannot now be executed immediately, it will become possible that the job will be executed by installing any particular unit or connecting any particular post-processing apparatus as required after the job is created and is then stored.

For the conventional image forming apparatus, for example, the patent literature 1 describes that the function that is frequently used can be selected, but it is limited to the function that can be executed currently. If the function is included in post-processing apparatus that is not yet connected, it cannot be selected.

By the image forming apparatus that is proposed in the patent literature 2 or the patent literature 3, a job cannot be created if the job is based on the post-processing apparatus that is not connected.

Based on the background situation and context described above, one object of the present invention is to provide an image forming apparatus, an image forming system, and a computer readable recording medium storing control program for the image forming apparatus that permit a job to be created to improve usability for users, even any particular unit or post-processing apparatus is not yet installed in or connected to the image forming apparatus and if it is the managed unit or post-processing apparatus.

### SOLUTION TO PROBLEM

Specifically, on the first aspect of the present invention, it provides an image forming apparatus that allows a unit to be mounted on/demounted from and/or a external device to be connected to/disconnected from the image forming apparatus, comprising:
a connection recognition section for recognizing that the unit is mounted and/or the external device is connected; and
a control section for managing the unit and/or the external device and managing a job, wherein
   the control section receives a recognition result from the connection recognition section and checks to determine whether the unit is mounted or dismounted and/or the external device is connected or disconnected and wherein allows to create currently inexecutable job that is unable to be executed under the current apparatus configuration on the assumption that the not yet mounted unit and/or the not yet connected external device being managed is used.

On the second aspect of the present invention based on the first aspect of the present invention, it provides the image forming apparatus includes a control section allows the currently inexecutable job to be created as a stored job.

On the third aspect of the present invention based on the first aspect of the present invention, it provides the image forming apparatus, the control section enables the currently inexecutable job to be stored.

On the fourth aspect of the present invention based on the first aspect of the present invention, it provides the image forming apparatus, being characterized by the fact that the control section enables the currently inexecutable job to be created on the assumption that the not yet mounted unit and/or the not yet connected external device being retained and managed by the user is used.

On the fifth aspect of the present invention based on the first aspect of the present invention, it provides the image forming apparatus, being characterized by the fact that the control section manages a usage history of the not yet mounted unit and/or not yet connected external device and enables currently inexecutable job to be created on the assumption that the not yet mounted unit and/or not yet connected external device that has ever been used is used.

On the sixth aspect of the present invention based on the first aspect of the present invention, it provides the image forming apparatus that it includes an operation and display section which accepts an operation input, and the control section responds to any operation on the operation and display section so that a function that uses the not yet mounted unit and/or the not yet connected external device that is assumed to be used can be selected when the currently inexecutable job is created.

On the seventh aspect of the present invention based on the sixth aspect of the present invention, it provides the image forming apparatus, being characterized by the fact that the control section enables the operation and display section to provide one display from which any function using the not yet mounted unit and/or the not yet connected external device can be selected and another display from which any executable function under the current apparatus configuration can be selected.

On the eighth aspect of the present invention based on the sixth aspect of the present invention, it provides the image forming apparatus, being characterized by the fact that the control section is operated to presents a list of stored jobs on the operation and display section, and is operated to displays the list of the executable jobs under the current apparatus configuration in the list of the stored jobs on the priority order.

On the ninth aspect of the present invention based on the sixth aspect of the present invention, it provides the image forming apparatus, being characterized by the fact that the stored jobs and the waiting job for execution jobs can be managed separately, and the executable jobs can be switched to the waiting jobs for execution and managed as such when the executable jobs are included in the stored jobs.

On the tenth aspect of the present invention based on the first aspect of the present invention, it provides the image forming apparatus, being characterized by the fact that the control section manages the currently inexecutable job as executable job when the mounted unit and/or not yet connected external devices that is assumed to be used for the currently inexecutable job is mounted or connected and the currently inexecutable job under the current apparatus configuration thus becomes executable.

On the eleventh aspect of the present invention based on the first aspect of the present invention, it provides the image forming apparatus, being characterized by the fact that where executable job is included in the stored job, the control section causes the operator inquires whether the executable job should be managed as the waiting job for execution on the operation and display section, and if it is chosen that the executable job should be managed as the waiting job for execution, the control section will be switched so that it can manage it as the waiting job for execution and if it is not chosen that the executable job should be managed as the waiting job for execution, the control section will be switched so that it can manage it as the stored job.

On the twelfth aspect of the present invention, it provides an image forming system that it includes:
a plurality of the image forming apparatuses based on any one of the first through eleventh aspects of the present invention; and
a network that interconnects the plurality of the image forming apparatuses with each other so that they can communicate with each other, wherein provided in one of the plurality of image forming apparatuses when a job is to be created, the control section provided in one of the plurality of image forming apparatuses enables the currently inexecutable job under the current apparatus configuration to be created that not yet mounted unit and/or not yet connected external device being managed by the control section is used.

On the thirteenth aspect of the present invention, that it includes:
a plurality the of image forming apparatuses based on any one of the first through twelfth aspects of the present invention; and
a network that interconnects the plurality of the image forming apparatuses with each other so that they can communicate with each other, wherein any currently non-executable under the current apparatus configuration is enabled to be created on the assumption that any unit and/or any external device being managed by the control unit or a control unit that is included in any other image forming apparatus that is connected to the control section or network, that is, any not yet mounted on and/or not yet external device connected to the one image information apparatus is used.

On the fourteenth aspect of the present invention, it provides the image forming system that it includes:
an image forming apparatuses on/from which a unit may be mounted/demounted and/or to/from which a external device may be connected or disconnected;
a network to which the image forming apparatus is communicatively connected; and
a control section communicatively connected to the network, wherein the image forming apparatus includes a connection recognition section that recognizes that a mounted unit and/or a connected external device is connected, /and the control section receives a recognition result from the connection recognition section via the network, obtains the management information for the unit and/or the external device, and checks to determine whether the unit and/or the external device is mounted or not mounted and/or connected or not connected /and wherein when a job that is enabled to run on the image forming apparatus is created, the control section enables a non-executable job under the current apparatus configuration to be created on the assumption that the not yet mounted unit and/or the not yet connected external device being managed is used.

On the fifteenth aspect of the present invention based on the fourteenth aspect of the present invention, it provides the image forming system, being characterized by the fact that the management of the unit and/or external device is performed by the control section.

On the sixteenth aspect of the present invention based on the fourteenth aspect of the present invention, it provides the image forming system, being characterized by the fact that the management of the unit and/or external device is performed by the image forming apparatus on which a job is to be executed or any other image forming apparatus connected to the network, and the management information is obtained by the control section through the network from the image forming apparatus that provides the management information.

On the seventeenth aspect of the present invention, it provides a computer readable recording medium storing control program for the image forming apparatus that allows a unit to be mounted on/demounted from and/or an external device to be connected to/disconnected from and including a connection recognition section for recognizing that the unit is mounted and/or the external device is connected, wherein the control program comprises:
a step of receiving the recognition results from the connection recognition section and checking to determine whether the unit is mounted or demounted and/or the external device is connected or disconnected ;
a step of obtaining the management information related to the management of the unit and/or external device; and
a step of creating a job, wherein
during the step of creating the job, allowing any currently inexecutable jobs under the current apparatus configuration to be created on the assumption that aunit not yet being mounted on and/or an external device not yet being connected to the image forming apparatus and being managed by the image forming apparatus is used.

### BRIEF DESCRIPTION OF THE DRAWINGS

FIG. 1 is a diagram that illustrates the configuration of the image forming system in accordance with one embodiment of the present invention;
FIG. 2 is a block diagram for the image forming apparatus that forms part of the image forming system;
FIG. 3 is a diagram that illustrates a software program designed for use with a Client PC forming part of the image forming system;
FIG. 4 is a flowchart diagram showing the steps of the procedure for creating a job;
FIG. 5 is a diagram showing one example of a screen on which a job output method can be selected;
FIG. 6 is a flowchart diagram showing the steps of the procedure for selecting a particular function;
FIG. 7 is a diagram showing one example of the function selection screen that will appear when the job printout function is selected;
FIG. 8 is a diagram showing one example of the function selection screen that will appear when the temporary job storing function is selected;
FIG. 9 is a flowchart diagram showing the steps of the control procedure for changing the temporarily stored job to the printed-out job in accordance with another embodiment of the present invention;
FIG. 10 is a flowchart diagram showing the steps of the procedure for creating a job on the printer driver included in a client PC in accordance with still another embodiment of the present invention;
FIG. 11 is a flowchart diagram showing the steps of the procedure for creating an option connection history as the management information in accordance with one embodiment of the present invention;
FIG. 12 is a flowchart diagram showing the steps of the procedure for selecting a function by using the option connection history;
FIG. 13 is a flowchart diagram showing the steps of the procedure for selecting a function by using the management information in any other image forming apparatus in accordance with another embodiment of the present invention;
FIG. 14 is a diagram that illustrates one example of the function selection screen that will appear when the job printout process is carried out in accordance with another embodiment of the present invention;
FIG. 15 is a flowchart diagram showing the steps of the procedure for displaying an executable job in the stored jobs on the wireline in accordance with another embodiment of the present invention; and
FIG. 16 is a flowchart diagram showing the steps of the procedure for changing the management of a temporarily stored job to the management of an executable job in accordance with another embodiment of the present invention.

### DESCRIPTION OF EMBODIMENTS

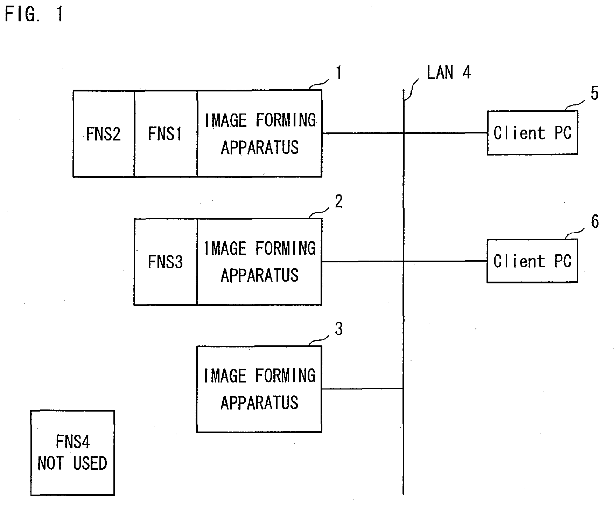

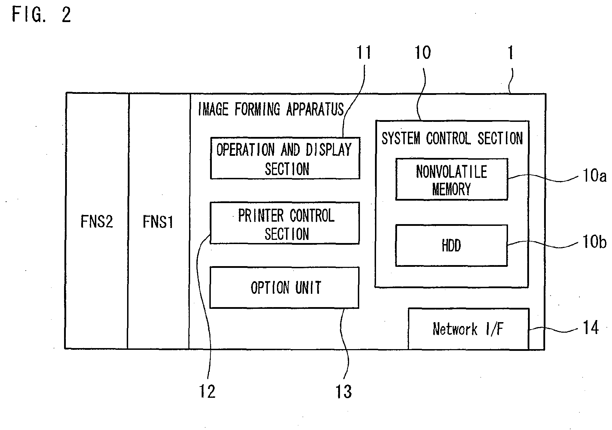

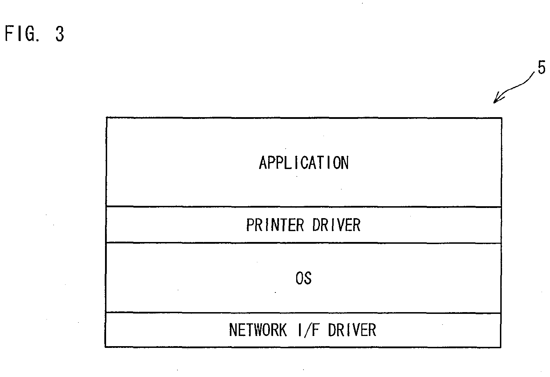

One embodiment of the present invention is described below. Fig. 1 is a diagram that illustrates the configuration of the image forming system in accordance with one embodiment of the present invention, Fig. 2 is a block diagram for the image forming apparatuses included in the image forming system, and Fig. 3 is a conceptual diagram for the software construction for a client PC 5.

As shown in Fig. 1, the image forming system includes a plurality of image forming apparatuses 1 to 3 that are connected to LAN 4 as a network , and to LAN 4, a client PC5 and a client PC 7 each implemented by a personal computer are connected. Each of the image forming apparatuses 1 to 3 allows units to be mounted on or demounted from the apparatus and external devices to be connected to or disconnected from the apparatus. To the image forming apparatus 1, the post-processing apparatus (FNS1) and post-processing apparatus (FNS2) are connected as external devices, and to the image forming apparatus 2, the post-processing apparatus (FNS3) is connected as a external device. No external device is connected to the image forming apparatus 3.
The post-processing apparatus (FNS4) is not connected to any of the image forming apparatuses 1 to 3 and is not in use.

The image forming apparatus 1 is taken as an example, and its construction is described in terms of functionalities by referring to Fig. 2.

The image forming apparatus 1 includes a system control section 10 to control the entire image forming apparatus 1, and the control section 10 contains a not shown central processing unit (CPU) and a software program designed to run the CPU. In addition, the system control section 10 includes a nonvolatile memory 10a in which the states or setting information for the image forming apparatus 1 and the management information for managing the units to be mounted on or the external devices to be connected to the image forming apparatus 1 are stored, and the hard disk drive (HDD) 10b on which the image data, the job data and the like are stored. The management information described above includes the information represented by the usage history for the units mounted on or external devices connected to each of the image forming apparatuses 1 to 3. Furthermore, the jobs that are managed by the system control section 10 can be stored on the HDD 10b or the like. Functionally, therefore, the system control section 10 is equivalent to the control section in the present invention.

The image forming apparatus 1 includes an operation and display section 11 which is controllably connected to the system control section 10. The operation and display section 11 presents the information and accepts the entry from the user or the like. In this embodiment, the operation and display section 11 has the operation part and the display part combined into one unit, and is implemented as the touch panel display. The operation part and the display part may be provided separately from each or may be provided as one unit. One typical example in which the operation part and display part are combined is the touch-panel display.

Furthermore, the image forming apparatus 1 includes an optional unit 13 that is functionally equivalent to the unit of the present invention. Optionally, optional unit 13 may be mounted or demounted or may be replaced and is controllably connected to the system control section 10. Whether the optional unit 13 is mounted or demounted is determined and recognized by the system control section 10. Functionally, therefore, the system control section 10 is equivalent to the connection recognition section of the present invention. It should be noted, however, that the present invention is not limited to the unit that is shown as the optional unit.

The system control section 10 recognizes that any external device such as the post-processing apparatus is connected. In this embodiment, it is recognized that FNS1 and FNS2 are connected.

The image forming apparatus 1 further includes a network interface 14 that is controllably connected to the system control section 10. The network interface 14 is connected to the LAN 4 through which any other image forming apparatuses 2 and 3, the client PCs 5, 6, and an image controller (not shown) can communicate with each other so that the image data and other data can be sent or received.

Note that the other image forming apparatuses 2 and 3 have the similar construction to the image forming apparatus 1, and will not be described any further.

FIG. 3 shows the software program configuration designed for use with the client PC 5. The client PC 6 has the similar design to the client PC 5 that is described below. Therefore, the client PC 6 will not be described any further.

The client PC 5 includes an operating system (OS) located on the bottom layer, the printer driver located above the OS, and an application software located above the printer driver. Furthermore, the client PC 5 includes a network interface driver running on the OS and driving a network interface (not shown). The network interface in the Client PC 5 is connected to the LAN 4 and allows the client PC 5 to communicate with the client PC 6 and image forming apparatuses 1 to 3 so that the image data and other data can be sent and received.

In the image forming system, a print job that is created by the Client PC 5 or the client PC 6 can be sent from them through the communication described above, and can be stored in the HDD on any of the image forming apparatuses 1 to 3 (such as the HDD 10b in the image forming apparatus 1). The original draft copies may be scanned by the scanner (not shown) provided in any of the image forming apparatuses 1 to 3 and may be stored in any of the image forming apparatuses 1 to 3.

The OS, the printer driver, the application software and the network interface driver that have been described above are operated under control of the CPU (not shown) included in each of the client PC 5 and the client PC 6. The CPU, printer driver, application software and network interface driver constitute the control section of the present invention in this embodiment.

In the image forming system, jobs can be created by each of the image forming apparatuses 1 to 3 under control of the system control section (such as the system control section 10 in the image forming apparatus 1). Although the following description is based on the image forming apparatus 1, it can also be applied to the other image forming apparatuses 2 and 3.

When a job is created as described above, based on the connection recognition information for the particular unit or external device that is obtained by the system control section 10 and the management information managed by the 10 section system control, the system control section 10 determines whether the job can be created or not on the assumption that any not yet mounted unit or not yet connected external device is used. Where it is assumed that any not yet mounted unit or any not yet connected external device that is not managed by the system control section 10 is used, it is determined that the job cannot be created, and where it is assumed that any not yet mounted unit or not yet connected external device that is managed by the system control section 10 is used, it is determined that the job can be created. The jobs that have thus been created can be stored in the HDD 10b included in the system control section 10.

In cases where units or external devices that are not managed by the system control section 10 in the own image forming apparatus but are managed by the system control section in any other image forming apparatus are not yet mounted on or not yet connected to the user's image forming apparatus/, the jobs that are to be executed on the own image forming apparatus can be created on the assumption that those units or external devices are used. The management information for the units or external devices that are managed by any other image forming apparatus can be obtained by the system control section 10 in the own image forming apparatus through LAN the 4.

In the image forming system described above, jobs can be created on the printer driver in each of the client PCs 5 and 6. Based on the connection recognition information and management information for the units or external devices that are managed in any particular image forming apparatus and can be obtained on the printer driver, it is determined on the application software in the client PC 5 or 6 whether the jobs should be able to be created on the assumption that the not yet mounted unit or not yet connected external device on the particular image forming apparatus is used.

On the printer driver, it is made impossible to create a job if it is assumed that the not yet mounted units or not yet connected external devices that are not managed are used. If it is assumed that the not yet mounted units or not yet connected external devices are managed are used, it is made possible to create a job, and the job thus created is delivered to the particular image forming apparatus through the LAN 4, where the job will be stored temporarily on the HDD in the particular image forming apparatus.

The connection recognition information for the units or external devices in each of the image forming apparatuses is delivered to the client PC 5 or the client PC 6. When a job is created on the client PC 5 or the client PC 6, the connection recognition information of the particular image forming apparatus can be obtained when the delivering is demanded to the particular image forming apparatus from the client PC 5 or the client PC 6. Otherwise, the connection recognition information is delivered from image forming apparatuses to the client PC 5 or the client PC 6 at any time.

The management for the units or external devices can be performed on the client PC 5 or the client PC 6 on which the job is to be created or the management information that is managed on each of the image forming apparatuses 1 to 3 can be obtained by the client PC 5 or the Client PC 6 through the LAN 4. The management information also can be maintained on the client PC 5 or the client PC 6.

The management information may be managed by any image forming apparatus other than the image forming apparatus on which a job is being executed. Where the units and/or external devices are managed by each of the image forming apparatuses, therefore, the management information can be obtained from all of image forming apparatuses connected to the LAN 4 when a job that is to be executed on any particular image forming apparatus is created.

It may be appreciated from the foregoing description that when a job is to be created on the client PC 5 or the client PC 6, the CPU in the client PC 5 or the client PC 6 is functionally equivalent to the control section of the present invention.

In accordance with the embodiment, the job that cannot be executed currently under the current apparatus configuration can be created when the job is based on the assumption that the not yet mounted unit and/or not yet connected external device being managed is used, and the freedom of the user's operation and workability can be increased accordingly. Even though a job is the job that cannot be executed under the current apparatus configuration because any unit required is not mounted, the job can be created and the created job can be stored if the job will be able to be executed when the unit or external device required to execute the job is mounted or connected.

when job is being created, there are some cases in which the unit or external device can be set automatically, If the particular unit or external device is the managed unit or external device and those items that are provided to set the unit or external device can be selected. Even though the particular unit or external device is the not yet mounted unit or not yet connected external device, there are other cases in which the unit or external device should be selected if it is known that the function is the one provided by the unit or external device that can be replaced by the user.

Some units can be replaced optionally while other units can be mounted as desired. The external devices may include any post-processing apparatus and paper feeder. In accordance with the present invention, it should be understood that the units and external devices are not limited to those units and external devices shown herein as examples.

Note that the units and/or external devices described above are managed on the side of the user and the units and/or external devices that are managed by the user include those that are possessed by the user or for which the actual usage history is maintained by the user. The actual usage history includes the history for the units and/or external devices that are actually running or are mounted on or connected to the image forming apparatus. The units and/or external devices that are managed by the user may include those that have been ordered or are expected to arrive at the user in the near future. It is usual that the units and/or external devices mentioned in the above examples are being managed on the side of the user. The information that is simply presented by the manufacturer or seller as the unit or external device that can be mounted on or connected to the image forming apparatus is not the information that is provided on the user' side. Thus, this information is not included in the management being made on the user's side.

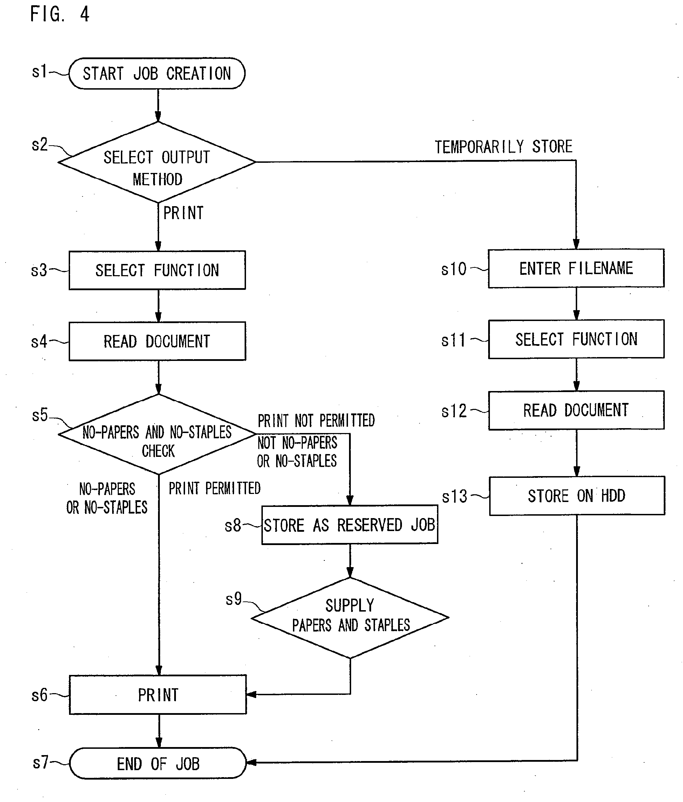

The procedure that is started with the job creation step to the job creation finishing step is described below by referring the flowchart in Fig. 4. In the following description, it is assumed that the job will be created on the image forming apparatus 1.

The procedure to be described below is executed by the system control section 10 in the image forming apparatus 1. When any operations are required for this procedure, the user can perform those operations on the operation and display section 11 on the image forming apparatus 1.

Firstly, the procedure starts to create a job (Step s1). When a job is to be created, the user can display the job creation screen on the operation and display section 11 by selecting the appropriate item, and can perform the operation as required. In response to this selection, the system control section 10 presents the output method selection and operation screen on the operation and display section 11 and prompts the user to select the appropriate output method.

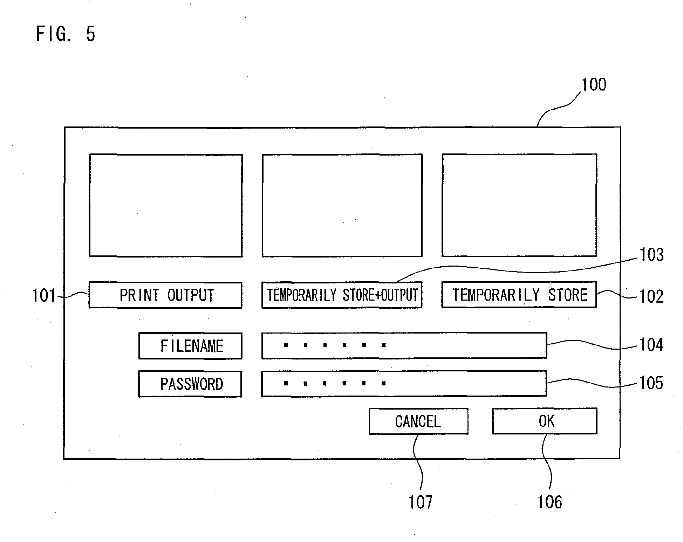

Fig. 5 shows an example of the output method selection screen 100 presented on the operation and display section 11 in the image forming apparatus 1. On the output method selection screen 100, there are operation buttons for selecting the appropriate job output method, including the printout button 101, the temporarily storing button 102 and the temporarily storing + outputting button 103. The printout button 101 is the operation button that is activated to indicate that the created job should be outputted on the printer. The temporarily storing button 102 is the operation button that is activated to indicate that the created job should be stored temporarily in the HDD or the like without outputting. The temporarily storing + output button 103 is the operation button that is activated to output and temporarily store the created job and retrieve the stored job that will be output.

On the output method selection screen 100, there are also the file name entry column 104 on which a file name is entered when the job is stored temporarily and the password entry column 105 on which the password for the file is entered if it is required.

On the output method selection screen 100, there are the OK button 106 and the CANCEL button 107. When the OK button 106 is depressed after any appropriate operation button is depressed, the method as selected and the data as entered will be confirmed. When the CANCEL button 107 is depressed, the method as selected as entered will be cancelled, and the method selection is permitted again.

When the printout or the temporarily storing + output is selected in the output method selection and this selection is confirmed by depressing the OK button 106 (Step s2, print), the function selecting process is performed (Step s3). During the function selection step, the function selection screen is displayed, allowing the functions (the post-processing functions such as stapling, punching, folding and the like) to be selected and accepting any operation input entered by the user (Step s3).

When the temporarily storing method is selected in the output method selection (Step s2, temporarily store), it is required that the file name is entered on the file name entry column 104 (Step s10). When the file name is entered, the function selection is performed (Step s11). During the function selection process, the function selection screen appears, allowing the functions (the post-processing functions such as stapling, punching, folding and the like) to be used by the job to be selected and display screen and prompting the user for the operation entry.

In this embodiment, it is impossible to create a job using any not yet mounted unit or any not yet connected external device if the printout is selected as the output method. If the temporarily storing is selected as the output method, all functions can be selected regardless of whether the unit and/or external device being managed are mounted/demounted and/or connected/disconnected. The control procedure will now be described below.

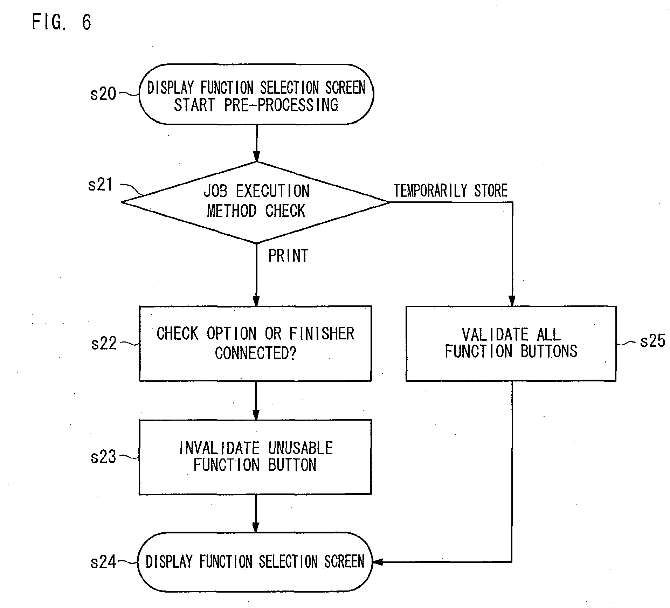

The procedure in which the function can be selected according the Step s3 or Step s11 is described by referring to the flowchart in Fig. 6.

The pre-processing step that is carried out before the function selection screen is displayed is started (Step s20), and it is checked to determine whether the printout or temporarily storing is to be selected as the job execution method (Step s21). If the printout is selected as the job execution method (Step s21, print), it is checked to determine that the unit or external device, that is, the optional unit or the finisher for the external device in this embodiment is connected or not (Step s22). When it is determined that there is a not yet mounted or connected optional unit or finisher, the function selection button will be invalidated as the unusable function related to the function implemented by such optional unit or finisher (Step s23), and then the function selection screen appears (Step s24).

On the other hard, If the temporarily storing is selected as the job execution method (Step s21, temporarily storing), all function selection buttons are made valid for the optional unit or the finisher being managed, regardless of whether they are connected or not (Step s25), and then the function selection screen appears (Step s24).

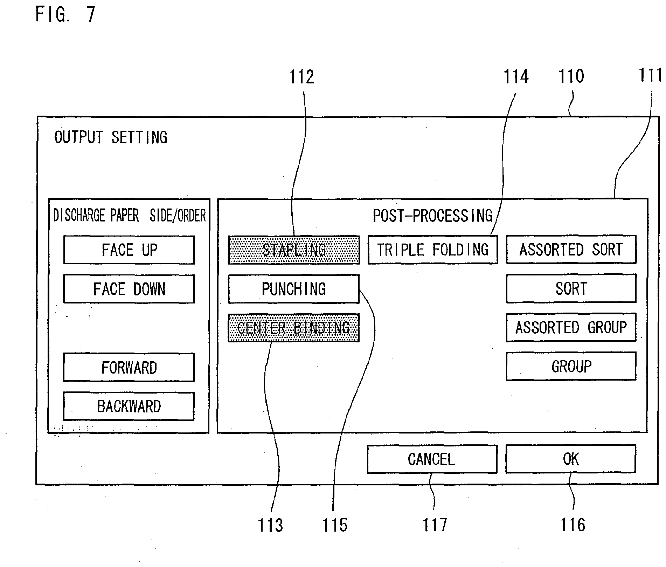

Fig. 7 shows an example of the function selection screen 110 in which some of the function selection buttons have been made invalid because the finisher is not connected during the printout process.

In the function selection screen 110, specifically, there are a group of function selection buttons 111 related to the post-processing functions, which include the stapling button 112, the center-binding button 113, the triple folding button 114, the punching button 115 and the like. It is noted that because the finisher for the stapling and center binding functions is not connected to the image forming apparatus, the stapling button 112 and the center-binding button 113 in the group of function buttons 111 are grayed out, meaning that those buttons are inactivated and the associated functions cannot be selected.

In the function selection screen 110, the function that can be selected on the function selection button is first selected, and this function selection is then determined by depressing the OK button 116. The function selection may be cancelled by depressing the CANCEL button 117, allowing the function to be selected again.

In this example, the user has a replaceable optional unit or finisher that provides the special function. If this optional unit or finisher is not connected to the image forming apparatus, however, the function provided by the optional unit or finisher cannot be selected during the function selection process. This is because the printout has already been selected on the output method selection, the job will be unable to be executed if the function provided by the optional unit or finisher not connected to the image forming apparatus should be selected.

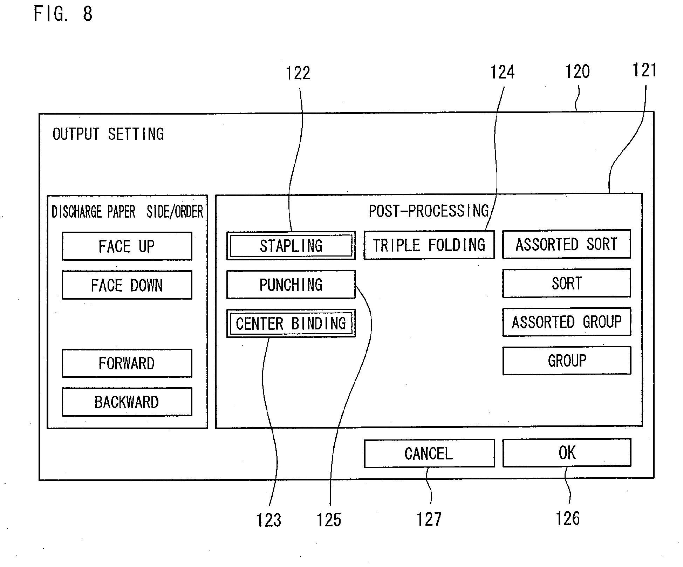

Fig. 8 shows an example of the function selection screen 120 that appears during the temporarily storing process.

Specifically, the function selection screen 120 contains a group of function selection buttons 121 related to the post processing function, which include the stapling button 122, the center-binding button 123, the triple folding button 124, the punching button 125 and the like. There are also the OK button 126 and the CANCEL button 127 allowed to be depressed. As this function selection screen 120 allows all function selection buttons to be activated as valid, the function provided by the finisher can be selected even though the finisher is not connected. Among the group of function selection buttons 121 on this screen, however, the function selection buttons that provides the function which can be executed immediately and the function selection buttons that provides the function which cannot be executed under the current apparatus configuration but can be executed if the associated unit of finisher is mounted or connected are distinguished from each other, and those function buttons are displayed as such. Thus, the user can easily and visually determine whether the function can be executed or not under the current apparatus configuration. In the present invention, however, it is not the requirement that the function button associated with the function that can be executed under the current apparatus configuration and the function button associated with the function that cannot be executed under the current apparatus configuration should be distinguished and displayed as such.

In this example, it is assumed that the temporarily storing function has been selected is and that it is possible to create a job and store the job in the HDD 10b or the like because the job does not need to be executed immediately. For this reason, it is possible to select the function associated with the not yet mounted optional unit or the function associated with the not yet connected finisher. Once the job is stored in the HDD 10b, the optional unit or finisher that provides the function required to execute the job will be able to be mounted on the image forming apparatus by the user. If the optional unit or finisher has been mounted on the image forming apparatus, it will be possible to execute the job. Then, the execution of the job will be permitted at the point of this time.

As shown in Fig. 4, the function selection process (Steps s3, s11) as described above is followed by the document reading process (Steps s4, s12). This document reading process may be started automatically if document is already set on the ADF (automatic document feeding machine) or can be started as demanded by the user.

During the printout process that follows the document reading process, it is checked to determine whether the no-paper or no-staple condition occurs on the finisher before the job is executed (Step s5). During the temporarily storing process, the job as created is stored in the HDD 10b (Step s13) and the job processing step is ended (Step s7).

If it is determined in Step s5 that the no-paper or no-staple condition does not occur, the print will be permitted, causing the printout to be carried out (Step s6), and the job processing step will then be ended (Step s7).

If it is determined that the no-paper or staple condition occurs (Step s5, no-paper condition or no-staple condition occurs), the print will not be permitted, causing the created job to be stored as the reserved job in the HDD 10b (Step s8). If papers or staples are supplied (Step s9), the printout will be performed (Step s6) and the job processing step will be ended (Step s7). If papers or staples are not supplied, the processing step will be suspended.

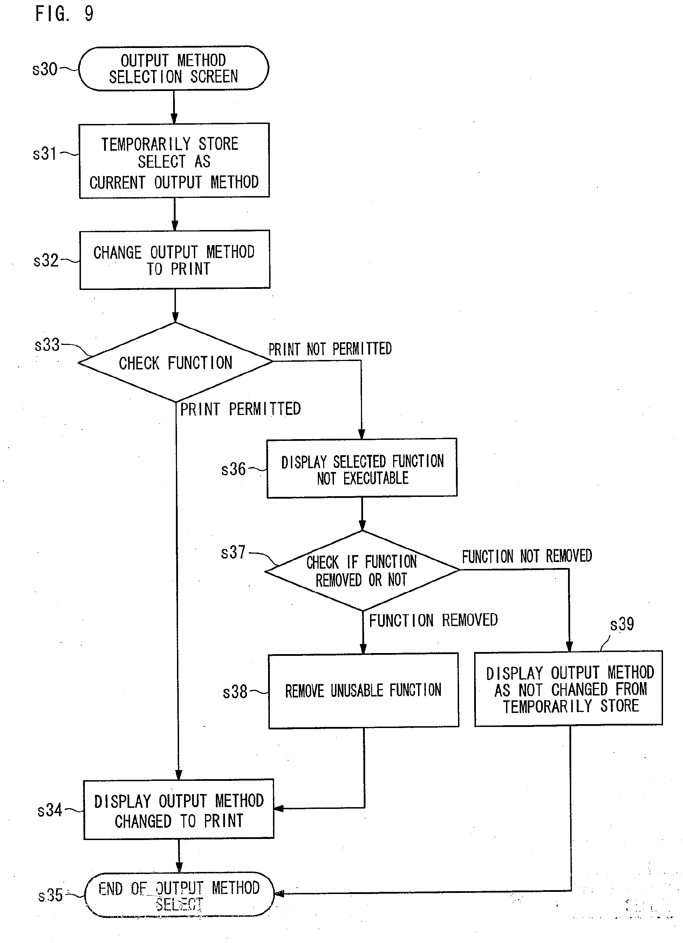

Next, the procedure that switches the job output method to the temporarily stored job printout will be described by referring to the flowchart in Fig. 9.

The selection of the temporarily stored job output method is made by selecting the appropriate job from the list of jobs (Step s30).

It is determined from the job information that the output method for the job selected in Step s30 is that for the temporarily stored job (Step s31). When the output method is then changed by the user into the printout on the operation and display section (the output method selection screen 100, 80, example), the job information is also changed to reflect the printout method (Step s32).

Next, the function determining step is performed (Step s33). During the function determining step, it is determined whether the optional unit mounted on and/or the finisher connected to the image forming apparatus is connected or not and it is also determined from the currently set function whether the printout will be permitted or not and the function required for the printout is provided or not in the image forming apparatus (Step s33).

If the printout is permitted by the job setting information, the output method for that job will be changed to the printout, and this change will be displayed on the operation and display section 11 and will be informed to the user (Step s34). The output method selection is then ended (Step s35).

If it is determined in Step s33 that the printout is not permitted by the current function setting, this will be displayed on the operation and display section 11, and it will be informed to the user that the function as selected cannot be executed under the current configuration of the image forming apparatus 1 (Step s36). The operation screen in which the function can be cancelled is then displayed. The operation screen is next displayed, in which the user can determine whether the function as selected should be cancelled or not or whether the change of the output method from the temporarily storing function to the printout function should be cancelled or not. It is then determined whether the inexecutable function should be cancelled (Step s37).

If the user is asked to cancel a function on the operation and display section 11, the function that cannot be used should be cancelled (Step s38), the fact that the output method for the job has been changed to the printout should be displayed (Step s34), and the output method selection should be ended (Step s35).

If the method is not asked to cancel a inexecutable function as intended by the user (Step s37, no function canceling), the changing of the output method from the temporarily storing to the printout should be stopped, the fact that the output method cannot be changed from the temporarily storing to the printout should be displayed (Step s39), and the output method selection should be ended (Step s35).

In accordance with the procedure described above, the process can be performed properly when any currently inexecutable job is processed so that it can be executed.

It may be understood from the foregoing description that jobs will be created in the image forming apparatus 1, and it is determined whether jobs can be created or not as specified by the information of the unit or external device being managed by the own image forming apparatus. Those jobs can also be created on the client PC connected to the LAN4.

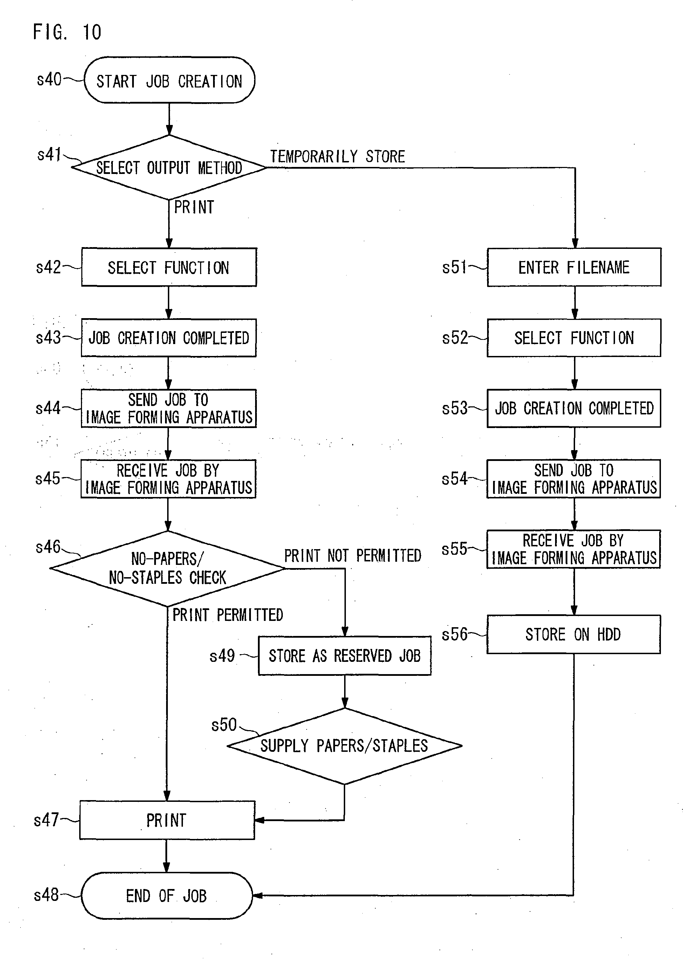

The procedure that allows the client PC to create jobs is now described by referring to the flowchart in Fig. 10.

In this embodiment, jobs are created on the client PC 5, and the procedure to be described below is performed by the CPU (which is functionally equivalent to the control section of the present invention) in the client PC 5. When any required operation is performed, the operation part required for the operation appears on the operation and display section in the-client PC 5, allowing the user to perform the required operation.

Firstly, the job creation step is started as required by the printer driver running on the CPU (Step s40).

During the job creation step, the connection recognition information regarding the optional unit and finisher in the image forming apparatus on which the job is being created is sent from each image forming apparatus via the LAN 4 and is received by the client PC 5 on which the job is being created.

The management information for the optional unit and finisher in the system is obtained as the management information which comprises the information being managed by each image forming apparatus and being consolidated. In the present invention, however, it is possible that only the information being managed by the image forming apparatus on which the job is being created may be used.

When a job is created on the printer driver, it is preferred that all of the functions being used should be available to the user, but the optional units that have ever been mounted or the finishers that have ever been connected may be stored in the nonvolatile memory so that they can be selected by user from the nonvolatile memory. If there is an optional unit or finisher that has ever been mounted or connected, this means that the optional unit or finisher that provides the function is available to the user. From this, it is known that the job is ready to be executed. When the job is created on the printer driver, it is possible to inquire about the history of the optional unit or finisher that has ever been connected to the image forming apparatus and then display the functions that can be used.

Next, the output method is selected. The output method selection is performed by using the output method selection screen shown in Fig. 5, and it is then determined whether the printout has been selected or the temporarily storing has been selected (Step s41).

On the output method selection screen, either the printout or the temporarily storing can be selected as the job output method. When a job is to be stored temporarily, the filename for the job can be entered.

When the printout is selected in the output method selection process (Step s41, print), the function selection process is carried out (Step s42). During the function selection process, the operation screen on which the function to be used for the job (such as stapling, punching, folding and the like) can be selected appears on the operation and display section, and is ready to accept any operation input from the user.

When the temporarily storing is selected during the output method selection process (Step s41, temporarily storing), the filename for the job is ready to be entered (Step s51). When the filename is entered, the function selection process follows (Step s52). During the function selection process, the operation screen on which the function to be used for the job (such as stapling, punching, folding and the like) can be selected appears on the operation and display section, and is ready to accept any operation input from the user.

In this embodiment, it is impossible to create jobs using the not yet mounted units or the not yet connected external devices if the printout is selected as the output method. If the temporarily storing is selected as the output method, however, it is possible to select all of the functions regardless of whether the units or external devices being managed are mounted or demounted or connected or disconnected. In this case, the control procedure is the same as that shown by the flowchart in Fig. 6.

On the function selection screen, it is shown that some of the function selection buttons are invalid or all of the function selection buttons can be selected depending on the output method.

That is in the printout processing procedure, it is possible to only select the executable functions (Step s42) while in the temporarily storing procedure, it is possible to select the inexecutable functions under the current apparatus configuration as well (Step s52). When a function is selected, the job creation on the printer driver is ended (Steps s43, s53). When the job creation is ended, the job data will be sent from the client PC 5 on which the job has been created through the LAN 4 to the appropriate image forming apparatus on which the job is to be executed (Steps s44, s54). The job data that has thus been sent be received by the appropriate image forming apparatus (Steps s45, s55).

In the image forming apparatus that has received the job data that shows that the printout has been selected, it is checked to determine whether the no-paper or no-staple condition occurred or not in the finisher before the printout is performed (Step s46). For the temporarily storing process, the job created will be stored in the HDD (Step s56) and the job processing step is ended (Step s48).

If it is determined in Step s46 that no-paper or no-staple condition does not occur, the printout will be permitted, and the printout is then performed as specified by the job data (Step s47). The job processing step is then ended (Step s48).

If it is determined that the no-paper or no-staple condition occurs (Step s46, no-paper or no-staple), the printout will not be permitted and the job as created will be stored as the reserved job in the HDD (Step s49). When any more papers or staples are supplied (Step s50), the printout is performed as specified by the job data (Step s47). The job processing step is then ended (Step s48). If papers or staples are not supplied, the job processing step is suspended.

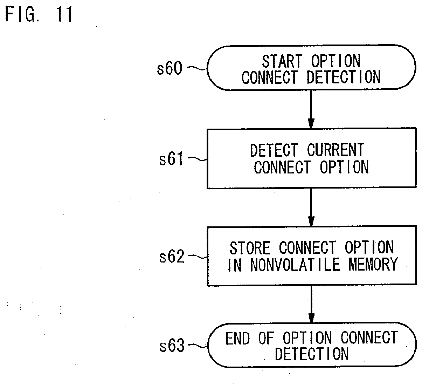

In each of the procedures described above, it is checked to determine whether the currently inexecutable job can be created using the management information for the optional unit or finisher being managed by the image forming apparatus. This management information can be structured by utilizing the usages in each of the image forming apparatuses. An example of the procedure related to this is described below by referring to Fig. 11. The procedure is performed by the system control section in the image forming apparatus, and the management information can be obtained by connecting the optional unit.

The first step is to detect the optional unit connected to the image forming apparatus (Step s60), and the results as detected are recognized by the system control section (Step s61). The information relating to the optional unit that has been recognized is stored in the nonvolatile memory that is installed in the system control section and this information is added to the management information for the optional unit or finisher being managed by the image forming apparatus (Step s62). In this way, the management information can be obtained as the history information of the optional unit or finisher connected to the image forming apparatus. Note that this history information is included in the usage history presented herein.

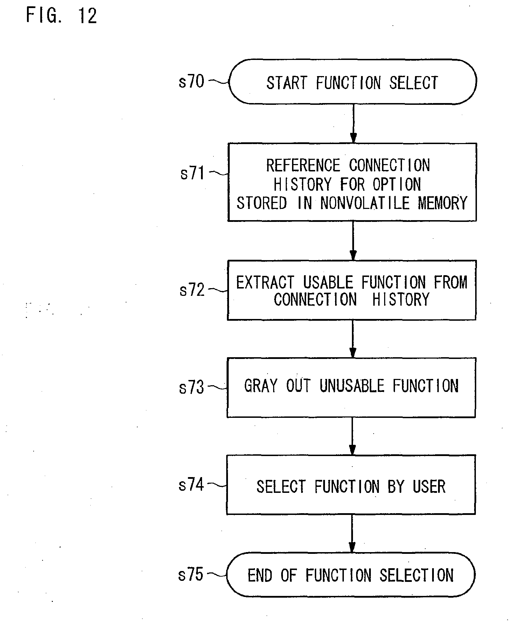

The management information for the optional unit or finisher that has been created and updated by the procedure described above is used during the function selection process. This procedure is described below by referring to the flowchart in Fig. 12.

That is when the function selection process is started (Step s70), the connection history for the optional unit stored in the nonvolatile memory described above will be referenced (Step s71). In this example, the connection history for the optional unit is functionally equivalent to the management information for the unit and external device.

In the system control section, the function that has been determined to be usable from the connection history that has been referenced as above will be extracted (Step s72). The connection history is held as the information for any optional unit other than the optional unit currently connected and that has ever been connected, and the functions that can be used include the functions provided by the optional unit or finisher that has ever been connected or currently connected.

The functions other than the functions mentioned above will then be grayed out as being unable to be selected so that they cannot be selected by user (Step s73). The user selects a function from the selectable functions (Step s74), and the function selection process is then ended (Step s75).

Although the management information for the optional unit or finisher being managed by the own image forming apparatus will be referenced when a job that is to be executed in the image forming apparatus, it may be appreciated from the foregoing description that the management information being managed by any other image forming apparatus can also be utilized.

Specifically, the image forming apparatuses connected through the LAN can communicate with each other so that the information for the optional unit or finisher that is currently connected or has ever been connected can be exchanged between each other. If the information is exchanged between the image forming apparatuses within the LAN, this means that an optional unit or finisher that provides the function is available to the user, and it can be known from this that the job will be able to be executed later.

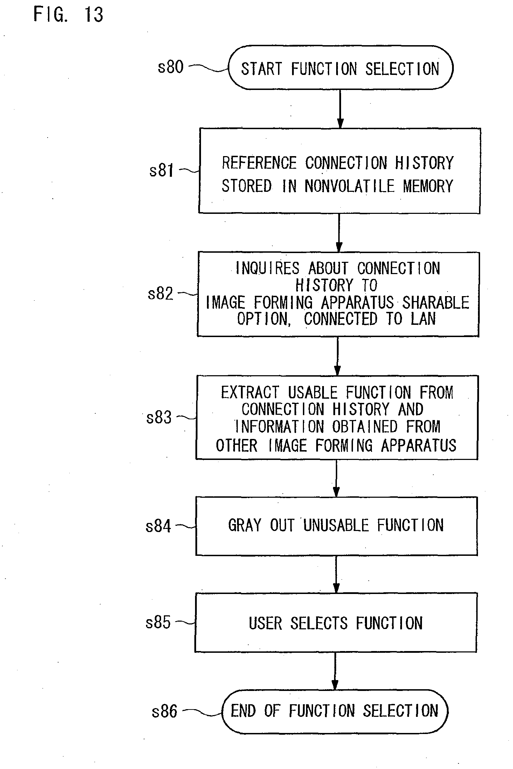

This procedure will now be described by referring to the flowchart in Fig. 13.

When the function selection process is started (Step s80), the connection history for the optional unit that is stored in the nonvolatile memory within the own system control section will be referenced (Step s81). Furthermore, the connection history will be inquired about any other image forming apparatus that is connected to the LAN4 and can share the optional unit with the own image forming apparatus (Step s82). For each of the other image forming apparatus, the connection information is also stored in its system control section.

The connection history information for the optional unit is delivered from each of the other image forming apparatuses, and this information is received by the own image forming apparatus. In the own image forming apparatus, the usable function relating to the optional unit currently connected and having ever been connected is extracted from the connection history for the own image forming apparatus and from the connection history obtained from each of the other image forming apparatuses (Step s83). Any other functions are grayed out as the non-usable functions so that they cannot be selected by the user (Step s84).

The user selects a function from the selectable functions. Those functions include the functions that cannot be executed under the current apparatus configuration. The function selection process is then ended by selecting function (Step s86).

In each of the procedures described above, if the temporarily storing is selected as the output method, it is possible to create a job on the assumption that the unit that is not yet mounted on or the external device that is not yet connected to the image forming apparatus but being managed during the function selection is used. Even though the printout has once been selected, however, it may also be possible to create a job on the assumption that the not yet mounted unit or not yet connected external device is used, and the job as created can be stored temporarily.

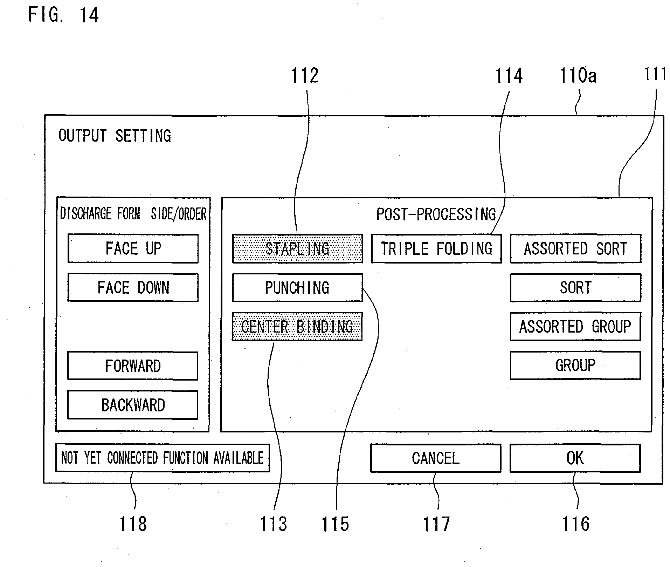

Fig. 14 shows an example of the variation of the function selection screen shown in Fig. 7. On the variation of this function selection screen 110a, there is a not yet connected function button 118 that appears as it is depressed. The other common operation buttons and the like are given the same reference numerals.

If the printout is selected during the output method selection, the stapling button 112 and the center binding button 113 in the not yet connected post-processing apparatus will be grayed out, and the selection of the associated functions will become invalid. When the not yet connected function button 117 is depressed here, the invalidation will be removed, thus permitting the stapling button 112 and the center binding button 113 to be depressed as shown in Fig. 8. Because the printout cannot be performed, however, it is still possible to create a job as the temporarily stored job. The information that the job will be created as the temporarily stored job is sent to the user. Upon receiving this information, the user who accept this be enabled to create the job. The user who does not want the job to be created as the temporarily stored job can depress the CANCEL button 117. This will return the user to the function selection screen in which the stapling button 112 and the center binding button 113 are grayed out.

When any existing unit or external devise has been replaced by another corresponding unit or external device, any job that can be executed under the current apparatus configuration of the image forming apparatus can be selected from the list of the temporarily stored jobs, and the job can be displayed in the priority order such that it appears in any new color, as being marked or on the top of the list. In this way, the user's operability can be improved.

If any executable job is found in the list of the temporarily stored jobs, the screen on which it can be determined that the job should be moved to the list of the wait-to-execute jobs will be displayed, and the job which would have been executed if the user had replaced the existing unit or external device with any corresponding unit or external device can be outputted immediately. In this way, the user's operability can be improved.

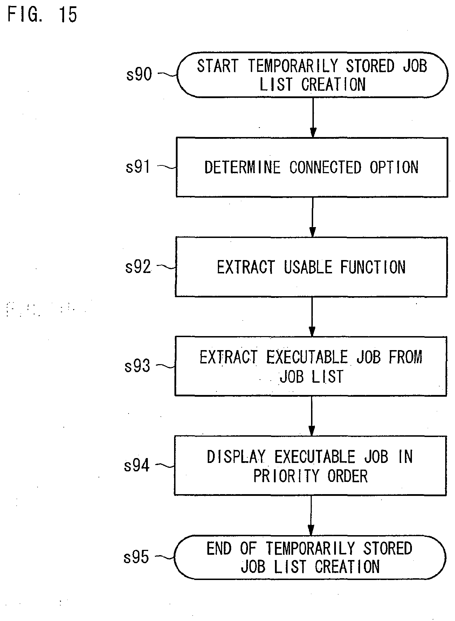

The following description provides the procedure for displaying in the priority order the jobs that are executable under the current apparatus configuration of the image forming apparatus when the temporarily stored jobs are displayed. The flowchart for this procedure is shown in FIG. 15.

The step of creating the temporarily stored job list is started (Step s90), and it is determined that the optional unit or finisher is connected to the image forming apparatus (Step s91).

The function that can be executed from the optional unit or finisher that is connected is extracted (Step s92).

Any job that provides the function that is extracted in Step s92 and can be executed under the current apparatus configuration of the image forming apparatus is selected from the list of the temporarily stored jobs. (Step s93).

The job that has been selected in Step s93 is displayed in the priority order on the operation and display section (Step s94). The step of creating the list of the temporarily stored jobs is then ended by this. (Step s95).

Note that the currently inexecutable jobs in accordance with the embodiment may be presented separately from the other inexecutable jobs or/ a units or external devices which don't allow the job to be executed because they are not yet mounted or connected may be presented so that they can be identified.

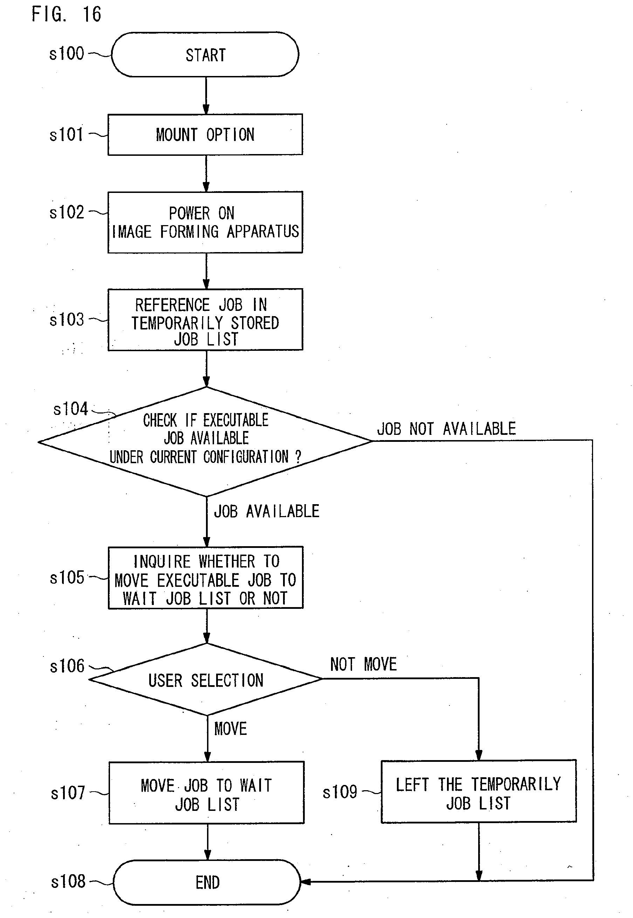

Next, the procedure for moving the job to the list of the waiting jobs for execution when the optional unit or finisher is mounted and the job becomes executable is now described by referring to the flowchart in Fig. 16.

The initial step of this procedure is started (Step s100), and an optional unit will be mounted (Step s101). During this step, the image forming apparatus is now powered off, and is restarted by powering it on (Step s102).

As the image forming apparatus is restarted, its system control section will reference jobs in the list of the temporarily stored jobs (Step s103). Then, the system control section checks to determine whether the job that provides the function that can be executed under the current apparatus configuration and can be used is found or not in the list of the temporarily stored jobs (Step s104).

If it is determined in Step s104 that there is no executable job, the processing step is ended (Step s108).

If it is determined in Step s104 that there is an executable job, the screen in which an inquiry is made about whether the executable job should be moved from the temporarily stored job list to the waiting job for execution list will be displayed on the operation and display section (Step s105). The user selects whether the job is moved to the waiting job for execution list or not (Step s106). If it is selected in Step s106 that this job should be moved to the wait-to-executed job list (Step s106, move), the job will be moved from the temporarily stored job list to the wait-to-execute job list (Step s107). This concludes the processing step (Step s108).

If it is determined in Step 106 that the job should not be moved to the wait-to-execute job list (Step s106, not move), the job will remain in the temporarily stored job list (Step s109). The processing step is concluded by this. (Step s108)

The management or the management switching can be performed by the control section that determines the state of the particular job during the particular time cycle or may be performed at the timing when the image forming apparatus is powered on and any unit or external device is mounted/demounted or connected/disconnected.

### EXAMPLE 1

The following description provides an example in which the special color toner is used in accordance with one embodiment of the present invention.

It is now assumed that there is an image forming apparatus that allows for the use of the special color toner. At the present time, however, the special color toner cannot be mounted on the image forming apparatus. It is therefore impossible to create the job that uses the special color toner. As such, such job cannot be executed on the image forming apparatus. If the user knows that the special color toner is retained by the user, the special color toner will be able to be mounted on the image forming apparatus later so that the job can be allowed to be executed. For the image forming apparatus on which the special color toner is mounted, therefore, it is only permitted to create a job and then store the job, but it is not permitted to create a job and then execute the job immediately. Then, the job that uses the special color toner may be stored in advance, and can be executed in the future when the special color toner is mounted on the image forming apparatus.

### EXAMPLE 2

The following description provides an example of using the staple-capable finisher.

It is now assumed that the staple-capable finisher is not connected to the image forming apparatus but it is retained by the user. In the current apparatus configuration, the image forming apparatus is not capable of using the staples, and it is thus impossible to create and execute the job that executes stapling. Because it is known to the user that the staple-capable finisher is retained by the user, the user can create and temporally store a job that executes stapling. The image forming apparatus will once be powered off, the staple-capable finisher will then be connected to the image forming apparatus, and the image forming apparatus will finally be powered on again. Then, the job that uses the staple function will be searched for from the list of the temporarily stored jobs, and a screen will be displayed on which it is determined whether the job should be executed or not. If the user selects to execute the job, the job that uses the staple function will be moved to the list of the wait-to-execute job from which the jobs will be executed in the sequential order.

### EXAMPLE 3

The following description provides an example of using the case binding machine.

The common case binding machine can be connected to the monochrome machine or color machine. As the case binding machine requires a lot of the warming time, it is better that this machine should be removed at the time when the job that does not involve the use of the case binding is executed. This can improve the working efficiency.

On the stage during which a job is being created, it is assumed that the case binding machine is now used by any other image forming apparatus or this machine is now not connected to the image forming apparatus so that the preliminary ready time can be reduced.

Because the binding machine is now not connected to the image forming apparatus, it is impossible to execute the job that involves the use of the case binding. In this case, the image forming apparatus once is powered off, the case binding machine will then be connected to the image forming apparatus, and the image forming apparatus will finally be powered on again. In this way, a job that involves the use of the case binding can be created so that it can be executed.

For the image forming apparatus that provides the functions in accordance with the present invention, the job that involves the use of the case binding can be created and stored without having to connect the case binding machine to the image forming apparatus. On the subsequent stage where the case binding machine that was used by any other image forming apparatus will become idle, and will then be ready to be connected to the image forming apparatus, the image forming apparatus will be powered off, the case binding machine will then be connected to the image forming apparatus, and will finally be powered on again. In this way, the job that involves the use of the case binding and that has previously been created will be able to be executed.

## Claims

1. An image forming apparatus (1) configured to allow a unit (13) to be mounted on/demounted from and/or an external device to be connected to/disconnected from the image forming apparatus, such a unit and/or external device configured or previously configured to perform at least one of a process or a post-process on a job executed by the image forming apparatus, comprising:
a connection recognition section configured to recognize that the unit (13) is mounted and/or the external device is connected; and
a control section (10) configured to manage the unit and/or the external device and manage a job,
wherein the control section (10) is configured to receive a recognition result from the connection recognition section and check to determine whether a unit (13) is mounted or dismounted and/or an external device is connected or disconnected, and
**characterised in that** the control section (10) is configured to:
obtain management information for the unit (13) and/or external device to determine if the unit and/or external device is retained and managed by a user or is mounted on or connected to another image forming apparatus that is used by the user, such units and external devices determined to be managed units (13) and/or devices;
prohibit job creation if it is determined that the job requires a unit (13) and/or external device which is not a managed unit and/or device;
allow job creation if it is determined that the job requires a managed unit (13) and/or device, wherein when it is determined that said managed unit and/or device is not mounted and/or connected to the image forming apparatus, the job is created as a currently inexecutable job that is unable to be executed under the current apparatus configuration but which is executable when the managed unit (13) and/or device is mounted/connected to the image forming apparatus (1), and
execute a job when the managed unit and/or external device that is to be used for the job is mounted or connected to the image forming apparatus (1).

2. The image forming apparatus (1) as defined in Claim 1, wherein the control section (10) is configured to allow the currently inexecutable job to be created as a stored job.

3. The image forming apparatus (1) as defined in Claim 1 or 2, wherein the control section (10) is configured to store the currently inexecutable job as a stored job.

4. The image forming apparatus (1) as defined in any of Claims 1 to 3, wherein the control section (10) is configured to allow the currently inexecutable job to be created when it is determined that the not yet mounted unit (13) and/or the not yet connected external device required for executing the job is retained and managed by the user.

5. The image forming apparatus (1) as defined in any of Claims 1 to 4, wherein the control section (10) is configured to manage a usage history of the unit (13) and/or the external device, and is configured to allow the currently inexecutable job to be created when it is determined that the not yet mounted unit and/or the not yet connected external device has ever been used.

6. The image forming apparatus (1) as defined in any of Claims 1 to 5, further comprising an operation and display section (11) that is ready to accept an entry related to the operation, wherein the control section (10) is configured to receive the entry related to the operation made on the operation and display section (11) and make it possible to select a function provided by the not yet mounted unit and/or the not yet connected external device when the currently inexecutable job is created if the unit and/or external device is determined to be a managed unit (13) and/or device.

7. The image forming apparatus (1) as defined in Claim 6, wherein the control section (10) is configured to present one display for selecting a function provided by the not yet mounted unit and/or the not yet connected external device and another display for selecting the function being executable under the current apparatus configuration separately from each other on the operation and display section.

8. The image forming apparatus (1) as defined in Claim 6 or 7, wherein the control section (10) is configured to present a list of stored jobs on the operation and display section, from which a list of the stored jobs being executable under the current apparatus configuration is displayed on the priority order.

9. The image forming apparatus (1) as defined in any of Claims 1 to 8, wherein the control section (10) is configured to manage stored jobs and waiting jobs for execution separately from each other, and causes an executable job to be managed as a waiting job for execution if the executable job is included in the stored jobs.

10. The image forming apparatus (1) as defined in any of Claims 1 to 9, wherein the control section (10) is configured to cause the currently inexecutable job to be managed as an executable job when the not yet mounted unit and/or the not yet connected external device is mounted and/or connected so that the currently inexecutable job under the current apparatus configuration becomes an executable job.

11. The image forming apparatus (1) as defined in any of Claims 6 to 9, wherein the control section (10) is configured to make an inquiry on the operation and display section (11) to determine whether the executable job is managed as a waiting job for execution, when the executable job is included in stored job, and
wherein the control section is configured to switch the management so that the executable job can be managed as a waiting job for execution if the management as a waiting job for execution is selected, and will switch the management to the management as a stored job if the management as the waiting job for execution is not selected.

12. An image forming system, comprising:
an image forming apparatus (1) according to any preceding claim; and
a network (4) for connecting the image forming apparatus (1) so that the image forming apparatus (1) can communicate with the network (4);
wherein the control section (10) is configured to communicate with the network (4) to determine if a unit (13) and/or device required for a job is a managed unit (13) and/or device.

13. A method of operating an image forming apparatus (1) that allows a unit (13) to be mounted on/demounted from and/or an external device to be connected to/disconnected from the image forming apparatus (1), such a unit (13) and/or external device configured or previously configured to perform at least one of process or post-process a job executed by the image forming apparatus (1), and including a connection recognition section for recognizing that the unit is mounted and/or the external device is connected , wherein the method comprises:
a step of receiving a recognition result from the connection recognition section and checking to determine whether a unit is mounted or demounted and/or an external device is connected or disconnected; and
a step of creating a job, **characterized by**
obtaining management information for the unit (13) and/or external device to determine if the unit (13) and/or external device is retained and managed by a user or is mounted on or connected to another image forming apparatus that is used by the user, such units and external devices determined to be managed units (13) and/or devices;
prohibiting job creation if it is determined that the job requires a unit (13) and/or external device which is not a managed unit and/or device;
allowing job creation if it is determined that the job requires a managed unit (13) and/or device, wherein when it is determined that said managed unit and/or device is not mounted and/or connected to the image forming apparatus, the job is created as a currently inexecutable job that is unable to be executed under the current apparatus configuration but which is executable when the managed unit (13) and/or device is mounted/connected to the image forming apparatus (1), and executing a job when the managed unit (13) and/or external devices that is to be used for the job is mounted or connected to the image forming apparatus (1).

14. A computer readable storage medium storing one or more programs, said one or more programs having instructions, which when executed by an electronic device perform a method according to claim 13.

## Patentansprüche

1. Bilderzeugungsvorrichtung (1), die konfiguriert ist, um zuzulassen, dass eine Einheit (13) an/von der Bilderzeugungsvorrichtung anzubringen/abzunehmen ist und/oder eine externe Vorrichtung mit/von der Bilderzeugungsvorrichtung zu verbinden/zu trennen ist, wobei eine solche Einheit und/oder externe Vorrichtung konfiguriert oder im Voraus konfiguriert ist, um zumindest einen von einem Prozess oder einem Post-Prozess bezüglich eines durch die Bilderzeugungsvorrichtung ausgeführten Auftrags durchzuführen, aufweisend:
einen Verbindungserkennungsabschnitt, der konfiguriert ist, um zu erkennen, dass die Einheit (13) angebracht ist und/oder die externe Vorrichtung verbunden ist; und
einen Steuerungsabschnitt (10), der konfiguriert ist, um die Einheit und/oder die externe Vorrichtung zu verwalten und einen Auftrag zu verwalten,
wobei der Steuerungsabschnitt (10) konfiguriert ist, um ein Erkennungsergebnis von dem Verbindungserkennungsabschnitt zu empfangen und eine Bestimmung zu überprüfen, ob eine Einheit (13) angebracht oder abgenommen ist und/oder eine externe Vorrichtung verbunden oder getrennt ist, und
**dadurch gekennzeichnet, dass** der Steuerungsabschnitt (10) konfiguriert ist, um:
Verwaltungsinformationen für die Einheit (13) und/oder externe Vorrichtung zu erhalten, um zu bestimmen, ob die Einheit und/oder externe Vorrichtung gesichert ist und durch einen Nutzer verwaltet wird, oder an einer anderen Bilderzeugungsvorrichtung angebracht oder mit dieser verbunden ist, die durch den Nutzer verwendet wird, wobei solche Einheiten und externe Vorrichtungen als verwaltete Einheiten (13) und/oder Vorrichtungen bestimmt sind;
eine Auftragserzeugung zu unterbinden, falls bestimmt ist, dass der Auftrag eine Einheit (13) und/oder eine externe Vorrichtung erfordert, welche keine verwaltete Einheit und/oder Vorrichtung ist;
eine Auftragserzeugung zuzulassen, falls bestimmt ist, dass der Auftrag eine verwaltete Einheit (13) und/oder Vorrichtung erfordert, wobei, wenn bestimmt ist, dass die verwaltete Einheit und/oder Vorrichtung nicht an der Bilderzeugungsvorrichtung angebracht und/oder mit dieser verbunden ist, der Auftrag als ein gegenwärtig unausführbarer Auftrag erzeugt ist, der nicht unter der gegenwärtigen Vorrichtungskonfiguration auszuführen ist, aber welcher ausführbar ist, wenn die verwaltete Einheit (13) und/oder Vorrichtung an/mit der Bilderzeugungsvorrichtung (1) angebracht/verbunden ist, und
einen Auftrag auszuführen, wenn die verwaltete Einheit und/oder externe Vorrichtung, die für den Auftrag zu verwenden ist, an oder mit der Bilderzeugungsvorrichtung (1) angebracht oder verbunden ist.

2. Bilderzeugungsvorrichtung (1) nach Anspruch 1, wobei der Steuerungsabschnitt (10) konfiguriert ist, um zuzulassen, dass der gegenwärtig unausführbare Auftrag als ein gespeicherter Auftrag zu erzeugen ist.

3. Bilderzeugungsvorrichtung (1) nach Anspruch 1 oder 2, wobei der Steuerungsabschnitt (10) konfiguriert ist, um den gegenwärtig unausführbaren Auftrag als einen gespeicherten Auftrag zu speichern.

4. Bilderzeugungsvorrichtung (1) nach einem der Ansprüche 1 bis 3, wobei der Steuerungsabschnitt (10) konfiguriert ist, um zuzulassen, dass der gegenwärtig unausführbare Auftrag zu erzeugen ist, wenn bestimmt ist, dass die noch nicht angebrachte Einheit (13) und/oder die noch nicht verbundene externe Vorrichtung, die zum Ausführen des Auftrags erforderlich sind/ist, gesichert ist und durch den Nutzer verwaltet wird.

5. Bilderzeugungsvorrichtung (1) nach einem der Ansprüche 1 bis 4, wobei der Steuerungsabschnitt (10) konfiguriert ist, um einen Gebrauchsverlauf der Einheit (13) und/oder der externen Vorrichtung zu verwalten, und konfiguriert ist, um zuzulassen, dass der gegenwärtig unausführbare Auftrag zu erzeugen ist, wenn bestimmt ist, dass die noch nicht angebrachte Einheit und/oder die noch nicht verbundene externe Vorrichtung verwendet worden sind/ist.

6. Bilderzeugungsvorrichtung (1) nach einem der Ansprüche 1 bis 5, ferner mit einem Betriebs- und Anzeigeabschnitt (11) der betriebsfähig ist, um einen Eintrag bezogen auf den Betrieb zu akzeptieren, wobei der Steuerungsabschnitt (10) konfiguriert ist, um den Eintrag bezogen auf den Betrieb, der auf dem Betriebs- und Anzeigeabschnitt (11) gemacht ist, zu empfangen, und zu ermöglichen, eine durch die noch nicht angebrachte Einheit und/oder die noch nicht verbundene externe Vorrichtung vorgesehene Funktion auszuwählen, wenn der gegenwärtig unausführbare Auftrag erzeugt ist, falls bestimmt ist, dass die Einheit und/oder externe Vorrichtung eine verwaltete Einheit (13) und/oder Vorrichtung sind/ist.

7. Bilderzeugungsvorrichtung (1) nach Anspruch 6, wobei der Steuerungsabschnitt (10) konfiguriert ist, um eine Anzeige zum Auswählen einer durch die noch nicht angebrachte Einheit und/oder die noch nicht verbundene externe Vorrichtung vorgesehene Funktion und eine andere Anzeige zum Auswählen der Funktion, die unter der gegenwärtigen Vorrichtungskonfiguration ausführbar ist, getrennt voneinander auf dem Betriebs- und Anzeigeabschnitts darzustellen.

8. Bilderzeugungsvorrichtung (1) nach Anspruch 6 oder 7, wobei der Steuerungsabschnitt (10) konfiguriert ist, um eine Liste von gespeicherten Aufträgen auf dem Betriebs- und Anzeigeabschnitt darzustellen, wobei eine Liste der gespeicherten Aufträge, die unter der gegenwärtigen Vorrichtungskonfiguration ausführbar ist, in der Prioritätsreihenfolge angezeigt wird.

9. Bilderzeugungsvorrichtung (1) nach einem der Ansprüche 1 bis 8, wobei der Steuerungsabschnitt (10) konfiguriert ist, um gespeicherte Aufträge und auf eine Ausführung wartende Aufträge getrennt voneinander zu verwalten, und bewirkt, dass ein ausführbarer Auftrag als ein auf eine Ausführung wartender Auftrag verwaltet wird, falls der ausführbare Auftrag in den gespeicherten Aufträgen enthalten ist.

10. Bilderzeugungsvorrichtung (1) nach einem der Ansprüche 1 bis 9, wobei der Steuerungsabschnitt (10) konfiguriert ist, um zu bewirken, dass der gegenwärtig unausführbare Auftrag als ein ausführbarer Auftrag verwaltet wird, wenn die noch nicht angebrachte Einheit und/oder die noch nicht verbundene externe Vorrichtung angebracht und/oder verbunden sind/ist, sodass der gegenwärtig unausführbare Auftrag unter der gegenwärtigen Vorrichtungskonfiguration ein ausführbarer Auftrag wird.

11. Bilderzeugungsvorrichtung (1) nach einem der Ansprüche 6 bis 9, wobei der Steuerungsabschnitt (10) konfiguriert ist, um eine Anfrage auf dem Betriebs- und Anzeigeabschnitt (11) durchzuführen, um zu bestimmen, ob der ausführbare Auftrag als ein auf eine Ausführung wartender Auftrag verwaltet wird, wenn der ausführbare Auftrag in dem gespeicherten Auftrag enthalten ist, und
wobei der Steuerungsabschnitt konfiguriert ist, um die Verwaltung so umzuschalten, dass der ausführbare Auftrag als ein auf eine Ausführung wartender Auftrag verwaltet werden kann, falls die Verwaltung als ein auf eine Ausführung wartender Auftrag ausgewählt ist, und die Verwaltung zu der Verwaltung als ein gespeicherter Auftrag umgeschaltet wird, falls die Verwaltung als der auf eine Ausführung wartende Auftrag nicht ausgewählt ist.

12. Bilderzeugungssystem, ausweisend:
eine Bilderzeugungsvorrichtung (1) nach einem der vorstehenden Ansprüche; und
ein Netzwerk (4) zum Verbinden der Bilderzeugungsvorrichtung (1), sodass die Bilderzeugungsvorrichtung (1) mit dem Netzwerk (4) kommunizieren kann;
wobei der Steuerungsabschnitt (10) konfiguriert ist, um mit dem Netzwerk (4) zu kommunizieren, um zu bestimmen, ob eine Einheit (13) und/oder Vorrichtung, die für einen Auftrag erforderlich sind/ist, eine verwaltete Einheit (13) und/oder Vorrichtung ist.

13. Verfahren zum Betreiben einer Bilderzeugungsvorrichtung (1), die zulässt, dass eine Einheit (13) an/von der Bilderzeugungsvorrichtung (1) anzubringen/abzunehmen ist und/oder eine externe Vorrichtung mit/von der Bilderzeugungsvorrichtung (1) zu verbinden/zu trennen ist, wobei eine solche Einheit (13) und/oder externe Vorrichtung konfiguriert oder im Voraus konfiguriert ist, um zumindest einen von einem Prozess oder einem Post-Prozess bezüglich eines durch die Bilderzeugungsvorrichtung (1) ausgeführten Auftrags durchzuführen, und einen Verbindungserkennungsabschnitt zum Erkennen, dass die Einheit angebracht und/oder die externe Vorrichtung verbunden ist, umfasst, wobei das Verfahren aufweist:
einen Schritt zum Empfangen eines Erkennungsergebnisses von dem Verbindungserkennungsabschnitt und Überprüfen, um zu bestimmen, ob eine Einheit angebracht oder abgenommen ist und/oder eine externe Vorrichtung verbunden oder getrennt ist; und
einen Schritt zum Erzeugen eines Auftrags,
**gekennzeichnet durch**
Erhalten von Verwaltungsinformationen für die Einheit (13) und/oder externe Vorrichtung zum Bestimmen, ob die Einheit (13) und/oder externe Vorrichtung gesichert und durch einen Nutzer verwaltet wird oder an/mit einer anderen Bilderzeugungsvorrichtung, die durch den Nutzer verwendet wird, angebracht oder verbunden ist, wobei solche Einheiten und externe Vorrichtungen als verwaltete Einheiten (13) und/oder Vorrichtungen bestimmt sind;
Unterbinden einer Auftragserzeugung, falls bestimmt ist, dass der Auftrag eine Einheit (13) und/oder externe Vorrichtung erfordert, welche keine verwaltete Einheit und/oder Vorrichtung ist;
Zulassen einer Auftragserzeugung, falls bestimmt ist, dass der Auftrag eine verwaltete Einheit (13) und/oder Vorrichtung erfordert, wobei, wenn bestimmt ist, dass die verwaltete Einheit und/oder Vorrichtung nicht an der Bilderzeugungsvorrichtung angebracht und/oder mit dieser verbunden ist, der Auftrag als ein gegenwärtig nicht ausführbarer Auftrag erzeugt wird, der nicht unter der gegenwärtigen Vorrichtungskonfiguration ausgeführt werden kann, aber welcher ausführbar ist, wenn die verwaltete Einheit (13) und/oder Vorrichtung an/mit der Bilderzeugungsvorrichtung (1) angebracht/verbunden ist, und
Ausführen eines Auftrags, wenn die verwaltete Einheit (13) und/oder externe Vorrichtung, die für den Auftrag zu verwenden ist, an der Bilderzeugungsvorrichtung (1) angebracht oder mit dieser verbunden ist.

14. Computerlesbares Speichermedium, das ein oder mehrere Programme speichert, wobei das eine Programm oder die mehreren Programme Anweisungen aufweist/aufweisen, welche, wenn sie durch eine elektronische Vorrichtung ausgeführt werden, ein Verfahren nach Anspruch 13 durchführen.

## Revendications

1. Appareil de formation d'image (1) configuré de manière à permettre à une unité (13) d'être montée sur / retirée de l'appareil de formation d'image, et/ou à un dispositif externe d'être connecté à / déconnecté de l'appareil de formation d'image, une telle unité et/ou un tel dispositif externe étant configurés ou préalablement configurés de manière à mettre en oeuvre au moins l'un parmi un processus ou un post processus sur une tâche exécutée par l'appareil de formation d'image, comprenant :
une section de reconnaissance de connexion configurée de manière à reconnaître que l'unité (13) est montée et/ou que le dispositif externe est connecté ; et
une section de commande (10) configurée de manière à gérer l'unité et/ou le dispositif externe et à gérer une tâche ;
dans lequel la section de commande (10) est configurée de manière à recevoir un résultat de reconnaissance en provenance de la section de reconnaissance de connexion et à vérifier afin de déterminer si une unité (13) est montée ou retirée et/ou si un dispositif externe est connecté ou déconnecté ; et
**caractérisé en ce que** la section de commande (10) est configurée de manière à :
obtenir des informations de gestion pour l'unité (13) et/ou le dispositif externe, afin de déterminer si l'unité et/ou le dispositif externe est ou sont conservés et gérés par un utilisateur, ou si l'unité est montée sur, ou si le dispositif externe est connecté à, un autre appareil de formation d'image qui est utilisé par l'utilisateur, de telles unités et de tels dispositifs externes étant déterminés comme étant des unités gérées (13) et/ou des dispositifs gérés ;
interdire une création de tâche s'il est déterminé que la tâche nécessite une unité (13) et/ou un dispositif externe qui n'est pas une unité gérée et/ou un dispositif géré ;
permettre la création de tâche s'il est déterminé que la tâche nécessite une unité gérée (13) et/ou un dispositif géré, dans lequel, lorsqu'il est déterminé que ladite unité gérée n'est pas montée sur, et/ou que ledit dispositif géré n'est pas connecté à, l'appareil de formation d'image, la tâche est créée en tant qu'une tâche actuellement inexécutable qui ne peut pas être exécutée en vertu de la configuration d'appareil en cours, mais qui peut être exécutée lorsque l'unité gérée (13) est montée sur, et/ou le dispositif géré est connecté à, l'appareil de formation d'image (1) ; et
exécuter une tâche lorsque l'unité gérée devant être utilisée pour la tâche est montée sur l'appareil de formation d'image, et/ou lorsque le dispositif externe géré devant être utilisé pour la tâche est connecté à l'appareil de formation d'image (1).

2. Appareil de formation d'image (1) selon la revendication 1, dans lequel la section de commande (10) est configurée de manière à permettre la création de la tâche actuellement inexécutable en tant qu'une tâche stockée.

3. Appareil de formation d'image (1) selon la revendication 1 ou 2, dans lequel la section de commande (10) est configurée de manière à stocker la tâche actuellement inexécutable en tant qu'une tâche stockée.

4. Appareil de formation d'image (1) selon l'une quelconque des revendications 1 à 3, dans lequel la section de commande (10) est configurée de manière à permettre la création de la tâche actuellement inexécutable lorsqu'il est déterminé que l'unité non encore montée (13) et/ou le dispositif externe non encore connecté requis pour exécuter la tâche est ou sont conservés et gérés par l'utilisateur.

5. Appareil de formation d'image (1) selon l'une quelconque des revendications 1 à 4, dans lequel la section de commande (10) est configurée de manière à gérer un historique d'utilisation de l'unité (13) et/ou du dispositif externe, et est configurée de manière à permettre la création de la tâche actuellement inexécutable lorsqu'il est déterminé que l'unité non encore montée et/ou le dispositif externe non encore connecté a ou ont déjà été utilisés.

6. Appareil de formation d'image (1) selon l'une quelconque des revendications 1 à 5, comprenant en outre une section d'opération et d'affichage (11) qui est prête à accepter une entrée liée à l'opération, dans lequel la section de commande (10) est configurée de manière à recevoir l'entrée liée à l'opération effectuée sur la section d'opération et d'affichage (11) et à permettre de sélectionner une fonction fournie par l'unité non encore montée et/ou le dispositif externe non encore connecté lorsque la tâche actuellement inexécutable est créée, si l'unité et/ou le dispositif externe est ou sont déterminés comme correspondant à une unité gérée (13) et/ou à un dispositif géré.

7. Appareil de formation d'image (1) selon la revendication 6, dans lequel la section de commande (10) est configurée de manière à présenter un affichage pour sélectionner une fonction fournie par l'unité non encore montée et/ou le dispositif externe non encore connecté, et un autre affichage pour sélectionner la fonction exécutable en vertu de la configuration d'appareil en cours, séparément l'un de l'autre, sur la section d'opération et d'affichage.

8. Appareil de formation d'image (1) selon la revendication 6 ou 7, dans lequel la section de commande (10) est configurée de manière à présenter une liste de tâches stockées sur la section d'opération et d'affichage, à partir de laquelle une liste des tâches stockées pouvant être exécutées en vertu de la configuration d'appareil en cours est affichée par ordre de priorité.

9. Appareil de formation d'image (1) selon l'une quelconque des revendications 1 à 8, dans lequel la section de commande (10) est configurée de manière à gérer des tâches stockées et des tâches en attente d'exécution, séparément les unes des autres, et amène une tâche exécutable à être gérée comme une tâche en attente d'exécution, si la tâche exécutable est incluse dans les tâches stockées.

10. Appareil de formation d'image (1) selon l'une quelconque des revendications 1 à 9, dans lequel la section de commande (10) est configurée de manière à amener la tâche actuellement inexécutable à être gérée comme une tâche exécutable lorsque l'unité non encore montée est montée, et/ou lorsque le dispositif externe non encore connecté est connecté, de sorte que la tâche actuellement inexécutable en vertu de la configuration d'appareil en cours devient une tâche exécutable.

11. Appareil de formation d'image (1) selon l'une quelconque des revendications 6 à 9, dans lequel la section de commande (10) est configurée de manière à effectuer une requête sur la section d'opération et d'affichage (11) en vue de déterminer si la tâche exécutable est gérée comme une tâche en attente d'exécution, lorsque la tâche exécutable est incluse dans une tâche stockée ; et
dans lequel la section de commande est configurée de manière à basculer la gestion, de sorte que la tâche exécutable peut être gérée comme une tâche en attente d'exécution si la gestion en tant qu'une tâche en attente d'exécution est sélectionnée, et elle basculera la gestion sur la gestion en tant qu'une tâche stockée si la gestion en tant que la tâche en attente d'exécution n'est pas sélectionnée.

12. Système de formation d'image, comprenant :
un appareil de formation d'image (1) selon l'une quelconque des revendications précédentes ; et
un réseau (4) pour connecter l'appareil de formation d'image (1) de sorte que l'appareil de formation d'image (1) peut communiquer avec le réseau (4) ;
dans lequel la section de commande (10) est configurée de manière à communiquer avec le réseau (4) en vue de déterminer si une unité (13) et/ou un dispositif nécessaire(s) pour une tâche correspond(ent) à une unité gérée (13) et/ou un dispositif géré.

13. Procédé d'exploitation d'un appareil de formation d'image (1) qui permet à une unité (13) d'être montée sur / retirée de l'appareil de formation d'image, et/ou à un dispositif externe d'être connecté à / déconnecté de l'appareil de formation d'image (1), une telle unité (13) et/ou un tel dispositif externe étant configurés ou préalablement configurés de manière à mettre en oeuvre au moins l'un parmi un processus ou un post processus sur une tâche exécutée par l'appareil de formation d'image (1), et incluant une section de reconnaissance de connexion destinée à reconnaître que l'unité est montée et/ou que le dispositif externe est connecté, dans lequel le procédé comprend :
une étape consistant à recevoir un résultat de reconnaissance en provenance de la section de reconnaissance de connexion et à vérifier afin de déterminer si une unité est montée ou retirée et/ou si un dispositif externe est connecté ou déconnecté ; et
une étape consistant à créer une tâche, **caractérisée par** les étapes ci-dessous consistant à :
obtenir des informations de gestion pour l'unité (13) et/ou le dispositif externe, afin de déterminer si l'unité (13) et/ou le dispositif externe est ou sont conservés et gérés par un utilisateur, ou si l'unité est montée sur, ou si le dispositif externe est connecté à, un autre appareil de formation d'image qui est utilisé par l'utilisateur, de telles unités et de tels dispositifs externes étant déterminés comme étant des unités gérées (13) et/ou des dispositifs gérés ;
interdire une création de tâche s'il est déterminé que la tâche nécessite une unité (13) et/ou un dispositif externe qui n'est pas une unité gérée et/ou un dispositif géré ;
permettre la création de tâche s'il est déterminé que la tâche nécessite une unité gérée (13) et/ou un dispositif géré, dans lequel, lorsqu'il est déterminé que ladite unité gérée n'est pas montée sur, et/ou que ledit dispositif géré n'est pas connecté à, l'appareil de formation d'image, la tâche est créée en tant qu'une tâche actuellement inexécutable qui ne peut pas être exécutée en vertu de la configuration d'appareil en cours, mais qui peut être exécutée lorsque l'unité gérée (13) est montée sur, et/ou le dispositif géré est connecté à, l'appareil de formation d'image (1) ; et
exécuter une tâche lorsque l'unité gérée (13) devant être utilisée pour la tâche est montée sur l'appareil de formation d'image, et/ou lorsque le dispositif externe géré devant être utilisé pour la tâche est connecté à l'appareil de formation d'image (1).

14. Support de stockage lisible par ordinateur stockant un ou plusieurs programmes, ledit un ou lesdits plusieurs programmes présentant des instructions, qui, lorsqu'elles sont exécutées par un dispositif électronique, mettent en oeuvre un procédé selon la revendication 13.
